# EUROPEAN PATENT SPECIFICATION

(11) **EP 0 688 016 B1**
(45) Date of publication and mention of the grant of the patent: **11.08.1999**
(21) Application number: 95109169.3
(22) Date of filing: 14.06.1995
(51) Int. Cl.: G11B 5/66, G11B 5/84, G11B 5/85, G11B 5/855, G11B 5/712, G11B 5/716

(54) **Method for manufacturing magnetic recording medium and apparatus therefor**
Methode und Vorrichtung zur Herstellung eines magnetischen Aufzeichnungsmediums
Procédé et dispositif pour la fabrication d'un support d'enregistrement magnétique

(30) Priority: 17.06.1994 JP 13562094
(43) Date of publication of application: 20.12.1995
(73) Proprietor: MATSUSHITA ELECTRIC INDUSTRIAL CO., LTD., Kadoma-shi, Osaka-fu, 571 (JP)
(72) Inventor: Sugita, Ryuji, Hirakata-Shi, Osaka, 573 (JP); Tohma, Kiyokazu, Hirakata-Shi, Osaka, 573 (JP)
(74) Representative: Eisenführ, Speiser & Partner

(56) References cited:
- EP-A- 0 468 488
- EP-A- 0 573 026
- PATENT ABSTRACTS OF JAPAN vol. 018, no. 394 (P-1775), 22 July 1994 & JP-A-06 111315 (KONICA CORP), 22 April 1994,

## Description

### BACKGROUND OF THE INVENTION

### Field of the Invention

The present invention relates to a thin film magnetic recording medium having excellent high density recording characteristics, or in particular, to a method for manufacturing a thin film magnetic recording medium and an apparatus therefor.

### Description of the Prior Art

Recording density to be dealt with by a magnetic recorder increases year by year, and magnetic recording media excellent in short wavelength characteristics are required for higher recording density. At present, a coat-type magnetic recording medium wherein magnetic powders are coated on a substrate is used mainly. Characteristics thereof has been improved to meet the requirement, but the improvement reaches near a limit.

A thin film magnetic recording medium is developed to exceed the limit. The thin film magnetic recording medium is formed on a substrate in vacuum usually with a process such as vacuum deposition, sputtering or plating, and it has excellent characteristics. The magnetic layer is made of a material such as Co, Co-Ni, Co-Ni-P, Co-O, Co-Ni-O, Co-Cr, Co-Ni-Cr, Co-CR-Ta or Co-CR-Pt. Among the materials, Co-O and Co-Ni-O are considered to be most suitable for a magnetic tape, and a deposition tape having a magnetic layer made of Co-Ni-O has already been used practically as a tape for a Hi 8 video cassette recorder.

EP-A-0 573 026 representing the closest prior art from which the invention proceeds discloses an apparatus for forming a thin film magnetic recording medium, comprising a substrate, a material source wherein a material to be deposited onto a region on the substrate is placed, a substrate supply system which supplies the substrate so as to run opposite the material source, at least one shielding plate provided between the substrate and the material source, a gas supply pipe for supplying gas including oxygen to the region, and a vacuum chamber containing the substrate, the material source, the shielding plate and the gas supply pipe. Further, this prior also discloses a method for forming a thin film magnetic recording medium, comprising the steps of providing a running substrate, providing a material source wherein a material to be deposited onto a region on the substrate is placed opposite the substrate in a vacuum chamber, providing at least one shielding plate between the substrate and the material source, supplying a gas including oxygen to the region, and evaporating the material placed in the material source to deposit atoms evaporated from the material source onto the region on the substrate.

There is a tendency that a magnetic recording and reproduction apparatus has a more compact size and a larger capacity and is produced at a lower cost. Then, it is demanded to provide a thin film magnetic recording tape having a higher S/N ratio at a short wavelength region.

### SUMMARY OF THE INVENTION

An object of the invention is to provide a method and an apparatus for manufacturing a thin film magnetic recording medium having a high S/N ratio with high efficiency.

In order to achieve the above object, according to a first aspect of the present invention, there is provided a method for forming a thin film magnetic recording medium in a thin film deposition apparatus comprising the steps of:
providing a running substrate,
providing a material source wherein a material to be deposited onto a region on said substrate is placed opposite said substrate in a vacuum chamber,
providing at least one shielding plate between said substrate and said material source,
supplying a gas including oxygen to said region, and
evaporating the material placed in said material source to deposit atoms evaporated from the material source onto said region on said substrate,
characterized by the further steps of
providing a reflector member arranged at a position wherein evaporated atoms travelling from said material source are reflected by said reflector member toward said region on said substrate wherein evaporated atoms travelling from said material source would not deposit if said reflector member were not provided, and increasing a temperature of said reflector member above a melting point of the material placed in said material source, and
reflecting atoms arriving from said evaporation source by said reflector member wherein atoms reflected by said reflector member deposit onto said region on said substrate.

In accordance with a second aspect of the present invention, there is provided an apparatus for forming a thin film magnetic recording medium comprising:
a substrate,
a material source wherein a material to be deposited onto a region on said substrate is placed,
a substrate supply system which supplies said substrate so as to run opposite said material source,
at least one shielding plate provided between said substrate and said material source,
a gas supply pipe for supplying gas including oxygen to the region, and
a vacuum chamber containing said substrate, said material source, said shielding plate and said gas supply pipe,
further characterized by
a reflector member arranged in said vacuum chamber at a position wherein evaporated atoms travelling from said material source are reflected by said reflector member towards said region on said substrate wherein evaporated atoms travelling from said material source would not deposit if said reflector member were not provided, said reflector member being heated to have a temperature above a melting point of the material placed in said material source.

Further advantageous embodiments are defined in the dependent claims.

In the production of a thin film magnetic recording medium in a thin film deposition apparatus according to the invention, a substrate runs on a cylindrical can in a vacuum chamber. A material source is provided opposite the substrate. At least one shielding plate is provided between the substrate and the material source to set a lowest limit of incident angles of atoms evaporated from the material source. Further, a reflector member is arranged at a position wherein evaporated atoms travelling from the material source are reflected by the reflector member towards an underlayer region on the substrate wherein evaporated atoms travelling from the material source would not deposit if the reflector member were not provided. A temperature of the reflector member is increased above a melting point of a material placed in the material source. Further, a gas including oxygen is supplied towards the underlayer region. The reflector member reflects atoms arriving from said evaporation source, and the adhered atoms combine with supplied oxygen to form a nonmagnetic or magnetic underlayer. Then, just after the underlayer is formed, the atoms evaporated from the material source deposit on the underlayer without reflected by the reflector member to form a magnetic layer. Therefore, the underlayer and the magnetic layer can be formed by running the substrate once. In a modified example, a separation member is provided to hinder deposition around a boundary between the underlayer region and a region for forming the magnetic layer.

An advantage of the present invention is that a thin film magnetic recording medium having a high S/N ratio is manufactured with high efficiency.

### BRIEF DESCRIPTION OF THE DRAWINGS

These and other objects and features of the present invention will become clear from the following description taken in conjunction with the preferred embodiments thereof with reference to the accompanying drawings, and in which:
Fig. 1 is a schematic diagram of a vacuum deposition apparatus for carrying out a method for manufacturing a magnetic recording medium of an embodiment of the invention;
Fig. 2 is a schematic diagram near a reflector provided inside the vacuum deposition apparatus shown in Fig. 1;
Fig. 3 is a schematic sectional of a thin film deposited on substrate in the apparatus of the first embodiment;
Fig. 4 is a schematic diagram of an inside of a vacuum deposition apparatus for carrying out a method for manufacturing a magnetic recording medium of a second embodiment of the invention;
Fig. 5 is a schematic sectional of a thin film deposited on substrate in the apparatus of the second embodiment; and
Fig. 6 is a schematic diagram of an inside of a vacuum deposition apparatus for carrying out a method for manufacturing a magnetic recording medium of an embodiment of the invention.

### DETAILED DESCRIPTION OF THE PREFERRED EMBODIMENTS

Referring now to the drawings, wherein like reference characters designate like or corresponding parts throughout the several views, embodiments of the invention are explained below. When a magnetic layer of Co-O is produced with vacuum deposition, the inventors found that the coercive force is increased and the S/N ratio is improved if a Co-O magnetic layer is deposited on a nonmagnetic or magnetic underlayer of Co-O. However, in a production process, an underlayer is formed once by supplying a substrate running on a cylindrical can, and then the substrate on which the underlayer is formed is run again to deposit a magnetic layer on the underlayer. Therefore, the productivity of the process becomes lower though the underlayer improves the S/N ratio. In the embodiments of the invention, the underlayer and the magnetic layer are formed at the same time.

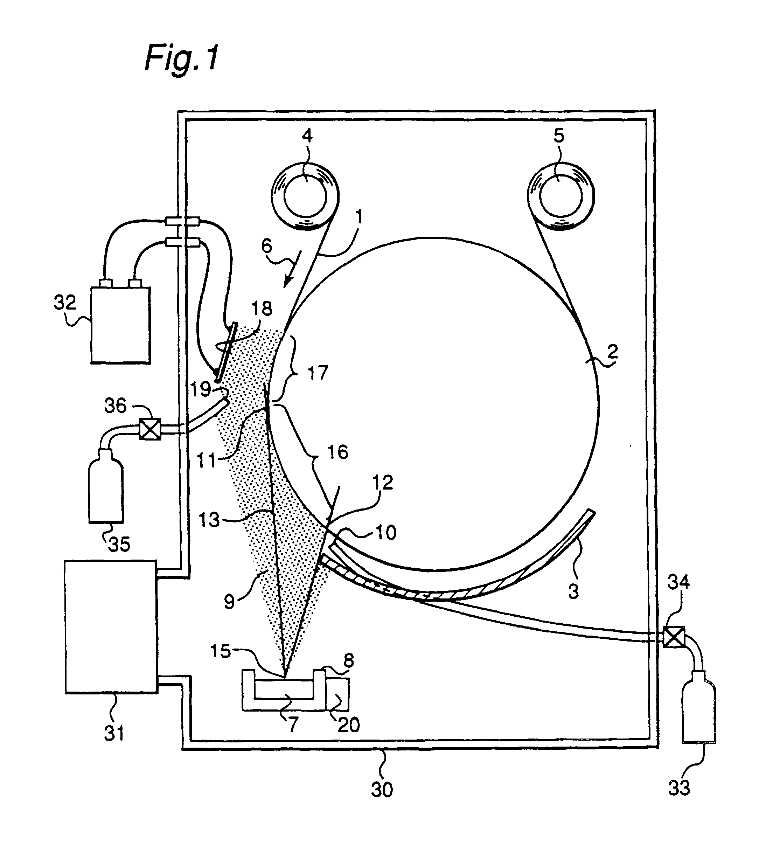

Fig. 1 shows schematically a vacuum deposition apparatus of a first embodiment of the invention for forming a thin film of a magnetic layer in vacuum. In a vacuum chamber 30, a substrate 1 made of a polymer material is supplied by a supply roll 4. When a magnetic tape is deposited on the substrate 1, it runs along the cylindrical can 2 in a direction denoted with an arrow 6, and it is wound by a winding roll 5 after deposition. An electron beam evaporation source is used as an evaporation source 8, and cobalt or an alloy such as Co-Ni is filled therein as an evaporation material 7. The electron beam evaporation source is preferable because a metal such as cobalt having a high melting point can be evaporated at a high evaporation rate. A shielding plate 3 is provided near the substrate 1 running on the cylindrical can 2 in order to prevent for unnecessary evaporated atoms to adhere to the substrate 1 or to limit an incident range of evaporated atoms 9 onto the substrate 1. The incident angle of an evaporated atom to the substrate 1 is defined as an angle of a straight line from an evaporation point 15 to a deposition point of the atom with respect to a straight line from the deposition point to the center of the cylindrical can 2, and the shielding plate 3 is set a desirable lowest limit of the incident angle. A gas supply pipe 10 is provided for introducing oxygen inside the vacuum chamber 30 towards a second region 16 for forming a magnetic layer, while another pipe 19 is set for supplying oxygen towards a first region 17 for forming an underlayer. The gas supply pipe 10 is provided at the downstream side of the substrate 1 with respect to the second region 16, while the other pipe 19 is provided near a boundary point 11 between the two regions 16 and 17 to supply oxygen towards the first region 17. By controlling the amount of supplied oxygen, a deposition tape having good recording and reproduction characteristics can be produced.

It is a feature of the embodiment that a reflector 18 of a thin plate is arranged before the boundary point 11, opposite to the substrate 1. The reflector 18 is made of tungsten, tantalum, molybdenum, carbon or the like, and carbon is most suitable among them because carbon is hard to react with the evaporation material 7 and hard to be deformed on heating. The evaporation source 8 and the reflector 18 extend along the width direction of the substrate 1, and a width of the substrate 1 is generally 50 cm or more. Thus, the evaporation source 8 is long vertically to the paper on which Fig. 1 is drawn, and the thin plate 8 is also long vertically to the paper.

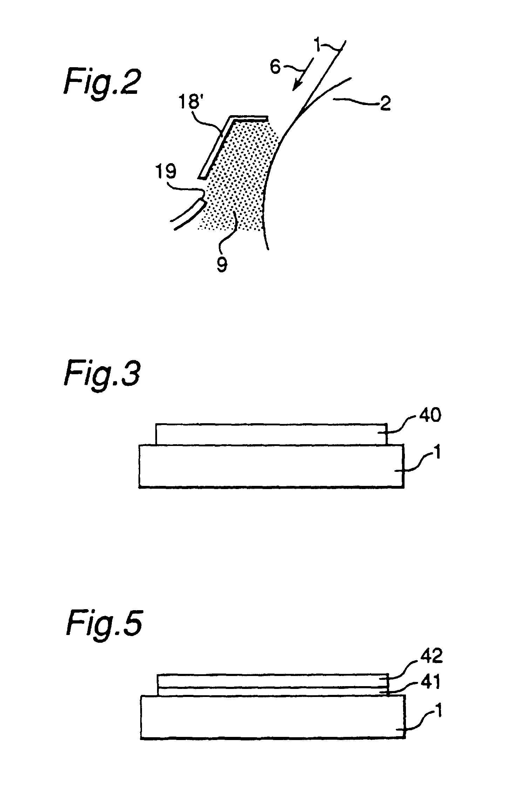

Fig. 2 shows a modified example of the reflector 18'. The reflector 18' is bent near the upstream side to reflect evaporated atoms 9 more effectively onto the first region 17 on the substrate 1. Then, it is prevented for evaporated atoms 9 to come to an undesired portion, to deposit onto the substrate 1 efficiently.

The reflector 18 has a temperature at which atoms arriving the thin plate do not adhere, but are reflected. Usually, when the temperature of the reflector 18 is increased above the melting point of the evaporation material 7, evaporated atoms rarely adhere to the reflector 18. Therefore, the reflector 18 is heated above the melting point of the evaporation material 7 in order to prevent deposition of evaporated atoms 9 onto the reflector 18. In order to prevent adhesion of evaporated atoms completely, it is better that the temperature is higher. However, the temperature has to be determined by taking into account the ease of the heating, a life of the thin plate and the like. A means for increasing the temperature of the thin plate 18 is not specified, and any means such as resistor heating, induction heating or electron beam heating may be adopted. In this embodiment, a power supply 32 is connected to the reflector 18, and it is heated by an electrical current flowing through the reflector 18.

It is a feature of the embodiment that evaporated atoms 9 are reflected by the thin plate 18 to adhere to the substrate 1 in the first region 17 for forming an underlayer before the boundary point (or an end point) 11 of the first region 17. If the reflector 18 were not provided, no evaporated atoms 9 will deposit in the first region 17 before the boundary point 11 onto the substrate 1. In this embodiment, the reflector 18 makes it possible to reflect such evaporated atoms to adhere to the substrate 1 to form an underlayer. The adhered atoms combine with supplied oxygen to form a nonmagnetic or magnetic underlayer. Then, atoms 9 evaporated from an evaporation portion 15 in the evaporation source 8 adhere to the substrate 1 in the second region 16 for forming a magnetic layer between the boundary point 11 and an end point 12 defined by the shielding plate 3. Incident angle at the end point 12 is set for example 60°, while incident angle at the boundary point 11 is for example about 90°. A thin film 40 is formed on the substrate 1, as shown in a section along a width direction in Fig. 3. It is explained above simply that an underlayer is formed in the first region 17 and a magnetic layer is formed on the underlayer in the second region 16. However, actually, there is no clear separation between the underlayer and the magnetic layer in the thin film 40 though the top and bottom surfaces thereof have different properties as the magnetic layer and the underlayer. Because the thin film comprising the underlayer and the magnetic layer can be formed at the same time in this embodiment, the productivity does not decrease if compared with a prior art process without the reflector 18.

On deposition, the vacuum chamber 30 is evacuated by a vacuum pump 31 such as a cryopump or a diffusion pump. The reflector 18 is heated up to a temperature at which evaporated atoms do not adhere thereto, but are reflected thereby when they arrive to it on forming a thin film on the substrate 1. Oxygen is supplied from oxygen cylinders 33, 35 through the pipes 10, 19 under the control of valves 34, 36. Then, the evaporation material 7 is heated by a heating means used in vacuum deposition, and in this embodiment, it is heated by an electron beam by an electron beam generator 20. (The position of the generator 20 is actually different from that shown in Fig. 1, or the electron beam generator 20 is actually mounted to the evaporation source 8 or the vacuum chamber 30 in a position which cannot be shown in Fig. 1.)

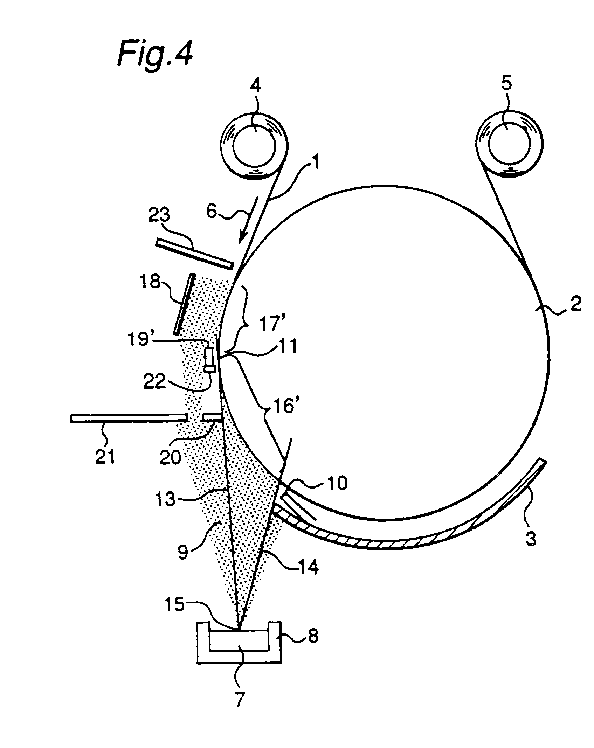

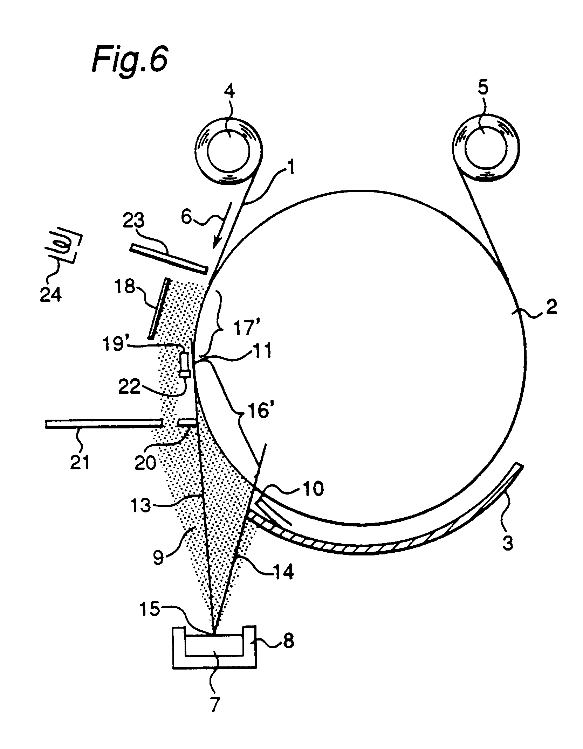

Next, another embodiment of the invention is explained with reference to Fig. 4, which is similar to Fig. 1, except that shielding plates 20, 21, 22 and 23 and a pipe 19' for introducing oxygen are provided. A vacuum chamber and other components are not shown in Fig. 4 for the ease of explanation. Evaporated atoms 9 which would not adhere to the substrate 1 if the reflector 18 were not set are reflected by the reflector 18 to be deposited onto the substrate 1. The adhered atoms combine with supplied oxygen to form a nonmagnetic or magnetic underlayer. Then, just after the underlayer is formed, a magnetic layer is formed in a magnetic layer region 16' facing an evaporation point 15. It is a feature of the embodiment that the shielding plate 20 which acts as a separation plate is set so that an edge thereof near the substrate 1 contacts with a line 13 from the evaporation point 15 to a boundary point 11 between an underlayer region 17' for forming an underlayer and the magnetic layer region 16' for depositing atoms from the evaporation source 7 without reflected by the reflector 18. That is, the shielding plate 20 inhibits evaporated atoms from travelling towards a boundary point 11 between the underlayer region 17' and the magnetic layer region 16'. Then, the shielding plate 20 prevents adhesion of evaporated atoms 9 to result an intermediate region between the two regions 16' and 17'. Evaporated atoms 9 rarely adhere to the intermediate region. However, slight evaporated atoms would adhere through roundabout flight courses around the shielding plate 20. Therefore, a thin film made of an underlayer 41 and a magnetic layer 42 is formed on the substrate 1, as shown in a section along a width direction in Fig. 5. The underlayer 41 is formed in the region 17', while the magnetic layer 42 is formed in the region 16'. By providing the shielding plate 20, the underlayer 41 is separated clearly from the magnetic layer 42. Therefore, the coercive force and the S/N ratio of the magnetic layer 42 can be improved further. The other shielding plates 21, 22 and 23 prevent undesirable deposition of evaporated atoms.

In the apparatus shown in Fig. 4, the pipe 19' for supplying oxygen is set at a position different from the pipe 19 shown in Fig. 1. However, the pipe 19' may be set at either of the positions shown in Figs. 1 and 4. However, as shown in Figs. 1 and 4, it is desirable to supply oxygen from the end point of the region 17' for forming the underlayer 41 towards the region 17', because oxygen for the underlayer 41 is hard to go roundabout towards the region 16' for forming the magnetic layer 42.

Further, the S/N ratio can be improved by changing the gas supplied to the region 17' for forming the underlayer 41 to oxygen gas including at least one of inert gases such as argon and nitrogen. The reason thereof is considered as follows: Because of the existence of the inert gas or the like, the underlayer 41 grows as grains, and this increases unevenness in a microscopic scale. Then, the magnetic layer grown on the underlayer aligns more highly in a film plane to increase coercive force and to improve the S/N ratio.

Further, adhesion force of the underlayer 41 to the substrate 1 can be improved further by supplying accelerated electrons near a start position of the region 17 for forming the underlayer. Fig. 6 is an example of a vacuum deposition apparatus for this modified method. Fig. 6 is similar to Fig. 4, except that an electron gun 24 for supplying accelerated electrons is set near a start position of the region 17 for forming the underlayer 41. Collision with the accelerated electrons activates the surface of the substrate 1 or evaporated atoms 9 to combine the substrate 1 with the underlayer 41 strongly. Therefore, the arrangement of the electron gun 24 is an effective means for improving the durability of the magnetic recording medium.

In the above-mentioned processes, evaporated atoms which would not adhere to the substrate if the reflector member were not set are reflected by the reflector to be deposited onto the substrate. The adhered atoms combine with supplied oxygen to form a nonmagnetic or magnetic underlayer. Then, just after the underlayer is formed, a magnetic layer is formed in a region facing the evaporation point, similarly to the prior art process. Therefore, the underlayer and the magnetic layer can be formed by running the substrate once, and the productivity of a thin film magnetic recording tape having a high S/N ratio does not decrease than that of the prior art process.

Next, examples of the production of magnetic tapes using the above-mentioned embodiments are explained. A magnetic characteristic and a recording and reproduction characteristic of the deposition tapes of the examples and a deposition tape produced with a prior art method without the reflector are compared.

In a first example of the production, the vacuum deposition apparatus having a basic structure shown in Fig. 1 is used to produce a deposition tape. A diameter of the cylindrical can 2 is 1.5 m, and a polyethylene telephthalate film of 6 µm of thickness is used as the substrate 1. Cobalt is used as the evaporation material 7. The thin plate 18 is made of a tungsten plate of 10 cm of height, 60 cm of width (a length along vertical direction to the paper wherein Fig. 1 is drawn), and 0.1 mm of thickness, and it is opposite to the substrate 1 as shown in Fig. 1. An electrical current flows through the thin plate 18 to increase its temperature up to 2000 K. The width of the substrate 1 is 50 cm. The shielding plate 3 is positioned so that the lowest incident angle of evaporated atoms 9 to the substrate 1 is 60° at the end point of the region 16' for forming the magnetic layer 42. In the above-mentioned apparatus, the magnetic layer 42 of thickness of 0.1 µm if formed. Oxygen is supplied through the pipes 10 and 19 at a rate of 0.8 and 0.5 l/min, respectively.

In a second example of the production, a magnetic layer of 0.1 µm of thickness is formed on the substrate 1 similarly to the first example, except that evaporated atoms rarely adhere between the region 16' for forming the magnetic layer 42 and the region 17' for forming the underlayer 41, as shown in Fig. 4. The gas supply pipe 19' for supplying oxygen is set at the position shown in Fig. 4, to supply oxygen at a rate of 0.3 l/min. However, there is substantially no difference in characteristics of magnetic tapes produced by using the pipes 19, 19' set at the positions shown in Fig. 1 and in Fig. 4.

In a third example of the production, a magnetic layer 42 of 0.1 µm of thickness is formed similarly to the second example, except that oxygen of 0.3 l/min and argon of 0.4 l/min are supplied through the pipe 19'.

Next, in a comparison example, a magnetic layer is produced with a prior art method without using the reflector 18. A vacuum deposition apparatus employed in the comparison example is the same as that shown in Fig. 1, except that the reflector 18 and the gas supply pipe 19 are not provided. A magnetic layer of 0.1 µm of thickness is formed in the same conditions as the first example except the above-mentioned points.

**Table 1**

| Characteristics of examples | | |
|---|---|---|
| | Coercive force (kA/m) | Reproduction Output (dB) |
| First example | 120 | +2 |
| Second example | 140 | +4 |
| Third example | 150 | +5 |
| Comparison example | 80 | 0 |

Magnetic characteristics and recording and reproduction characteristics of the magnetic recording media produced as explained above are evaluated. A magnetic characteristic is evaluated by measuring a hysteresis curve along the longitudinal direction to determine the coercive force. The longitudinal direction means the direction along which the substrate runs on deposition. After the medium is slit into tapes, a recording and reproduction characteristic is measured with a ring type magnetic head made of Sendust and having a gap length of 0.15 µm. Table 1 summarizes results of the measurement on coercive force and a reproduction output. The output measured by recording and reproducing a signal of recording wavelength of 0.5 µm is represented relative to the output of the tape of comparison example denoted as 0 dB.

The magnetic tape of the first example has coercive force of 1.5 times that of the comparison example and reproduction output higher by 2 dB than that of the comparison example.

The magnetic tape of the second example has coercive force and reproduction output higher than the first example. This is ascribable to separation of the magnetic layer and the underlayer because evaporated atoms rarely adhere between the regions for forming the magnetic layer and for forming the underlayer.

The magnetic tape of the third example has coercive force and reproduction output higher than the second example. This is ascribable to grain growth in the underlayer so that crystalline alignment becomes better along a film plane of the magnetic layer.

As explained above, a magnetic tape produced according to the invention has a higher S/N ratio than the prior art tape, while the productivity of the invention is similar to that of the prior art process.

In the above-mentioned examples, cobalt is used as the evaporation material 7. However, the evaporation material 7 is not limited to cobalt. When an alloy such as Co-Ni, Co-Fe or Co-Ni-Fe may be used as the evaporation material 7, advantages of the invention is obtained similarly. Further, the thickness of the magnetic layer is not limited to the value used in the examples.

In the above-mentioned examples, a polyethylene telephthalate film is used as the substrate 1. However, a polymer film such as a polyimide film, a polyamide film, a polyether imide film, a polyethylene naphthalate film, or a polymer film on which a layer is formed can also be used as the substrate 1. The thickness of the substrate 1 is also not limited to the examples. Further, the incident angle of evaporated atoms 9 onto the substrate 1, the material, shape, size and the like of the reflector are also not limited to the above-mentioned embodiments.

In the above-mentioned embodiments, only one shielding plate 3 is provided for restricting incident angles of evaporated atoms 9, and it determines the lowest limit of the incident angle. Therefore, the highest incident angle is near 90°. However, if it is desirable to limit the highest incident angle down to say 80°, a second shielding plate is also provided to limit the highest incident angle. For example, if the shielding plate 20 shown in Fig. 4 is extended further across the line 13 toward the first shielding plate, the highest incident angle is limited.

In the above-mentioned embodiments, the substrate 1 is carried on the cylindrical can 2. However, the substrate is not necessarily needed to be carried on the can 2. For example, in a modified embodiment, the substrate is moved as a belt supported between two rolls, and a thin film is formed on the moving, flat belt.

In the above-mentioned embodiments, a thin film is produced with vacuum deposition. However, it is also produced with sputtering deposition or ion plating similarly by providing the reflectors near the substrate as in the above-mentioned embodiments. A thin film deposition apparatus using sputtering deposition or ion plating is analogous to those shown in Figs. 1, 4 and 6, as is known to a person skilled in the art, and it is not illustrated with drawings. For example, in sputtering deposition, the evaporation material 7 is replaced with a target material, and an electric power is provided to the target material to generate ions which sputters the target to evaporate the target material. In the ion plating, electrodes are provided. Thus, a thin film magnetic recording medium having a high S/N ratio can be manufactured with high efficiency by using ion plating or sputtering.

## Claims

1. A method for forming a thin film magnetic recording medium in a thin film deposition apparatus comprising the steps of:
providing a running substrate (1);
providing a material source (8) wherein a material (7) to be deposited onto a region (17; 17') on said substrate (1) is placed opposite said substrate (1) in a vacuum chamber (30);
providing at least one shielding plate (3) between said substrate (1) and said material source (8);
supplying a gas including oxygen to said region (17; 17'); and
evaporating the material (7) placed in said material source (8) to deposit atoms (9) evaporated from the material source (8) onto said region (17; 17') on said substrate (1);
characterized by the further steps of
providing a reflector member (18; 18') arranged at a position wherein evaporated atoms (9) travelling from said material source (8) are reflected by said reflector member (18; 18') toward said region (17; 17') on said substrate (1) wherein evaporated atoms (9) travelling from said material source (8) would not deposit if said reflector member (18; 18') were not provided, and increasing a temperature of said reflector member (18; 18') above a melting point of the material (7) placed in said material source (8); and
reflecting atoms arriving from said evaporation source (8) by said reflector member (18; 18') wherein atoms (9) reflected by said reflector member (18; 18') deposit onto said region (17; 17') on said substrate (1).

2. The method according to Claim 1, wherein the gas is supplied to said region (17;17') from a downstream side with respect to said region (17;17').

3. The method according to Claim 2, wherein the gas includes at least nitrogen or one of inert gases besides oxygen.

4. The method according to Claim 1, comprising further the step of supplying accelerated electrons near a start position of said region (17;17') at which atoms (9) start to be deposited along a running direction of said substrate (1).

5. The method according to Claim 1, further comprising the step of providing a separation member (20) which inhibits evaporated atoms (9) from travelling towards a boundary (11) of said region (17'), the boundary (11) being at a downstream side of said region (17') with respect to a running direction (6) of said substrate (1).

6. The method according to Claim 5, wherein the gas is supplied to said region (17').

7. The method according to Claim 6, wherein the oxygen gas includes at least nitrogen or one of inert gases besides oxygen.

8. The method according to Claim 5, comprising further the step of supplying accelerated electrons near a start position of said region (17') at which atoms (9) start to be deposited along a running direction (6) of said substrate (1).

9. An apparatus for forming a thin film magnetic recording medium comprising:
a substrate (1);
a material source (8) wherein a material (7) to be deposited onto a region (17; 17') on said substrate (1) is placed;
a substrate supply system (4, 5) which supplies said substrate (1) so as to run opposite said material source (8);
at least one shielding plate (3) provided between said substrate (1) and said material source (8);
a gas supply pipe (19; 19') for supplying gas including oxygen to the region (17; 17'); and
a vacuum chamber (30) containing said substrate (1), said material source (8), said shielding plate (3) and said gas supply pipe (19; 19');
further characterized by
a reflector member (18; 18') arranged in said vacuum chamber (30) at a position wherein evaporated atoms (9) travelling from said material source (8) are reflected by said reflector member (18; 18') towards said region (17; 17') on said substrate (1) wherein evaporated atoms (9) travelling from said material source (8) would not deposit if said reflector member (18; 18') were not provided, said reflector member (18; 18') being heated to have a temperature above a melting point of the material (7) placed in said material source (8).

10. The apparatus according to Claim 9, wherein said reflector member (18;18') comprises carbon.

11. The apparatus according to Claim 9, wherein said gas supply pipe (19;19') is set at a position near said substrate (1) in a downstream side with respect to the region (17;17').

12. The apparatus according to Claim 11, wherein the gas supply pipe (19;19') supplies gas including at least nitrogen or one of inert gases besides oxygen.

13. The apparatus according to Claim 9, further comprising a separation member (20) which is arranged at a position to inhibit evaporated atoms (9) from travelling towards a boundary (11) of the region (17;17'), the boundary (11) being at a downstream side of the region (17;17') with respect to a running direction (6) of said substrate (1).

14. The apparatus according to Claim 9, further comprising an electron gun (24) arranged at a position to supply accelerated electrons near a start position of the region (17') at which atoms (9) start to be deposited along a running direction (6) of said substrate (1).

## Patentansprüche

1. Verfahren zum Erzeugen eines magnetischen Dünnschicht-Aufzeichnungsmediums in einer Dünnschicht-Abscheidevorrichtung, welches die folgenden Schritte enthält:
Bereitstellen eines sich bewegenden Substrates (1),
Bereitstellen einer gegenüberliegend zu dem Substrat (1) in einer Vakuumkammer (30) angeordneten Materialquelle (8), in der ein auf einen Bereich (17; 17') des Substrats (1) abzuscheidendes Material (7) aufgenommen ist,
Bereitstellen von zumindest einer Abschirmplatte (3) zwischen dem Substrat (1) und der Materialquelle (8),
Zuführen eines Sauerstoff enthaltenden Gases zu dem Bereich (17; 17'), und
Verdampfen des Materials (7), welches in der Materialquelle (8) aufgenommen ist, um Atome (9), die aus der Materialquelle (8) verdampft sind, auf dem Bereich (17; 17') des Substrats (1) abzuscheiden,
gekennzeichnet durch die weiteren Schritte:
Bereitstellen eines Reflektorelementes (18; 18'), das in einer Position angeordnet ist, in der verdampfte Atome (9), die von der Materialquelle (8) stammen, durch das Reflektorelement (18; 18') zu dem Bereich (17; 17') auf dem Substrat (1) reflektiert werden, wobei verdampfte Atome (9), die von der Materialquelle (8) stammen, nicht abgeschieden werden würden, wenn das Reflektorelement (18; 18') nicht vorgesehen wäre, und Erhöhen der Temperatur des Reflektorelements (18; 18') über den Schmelzpunkt des Materials (7), das in der Materialquelle (8) aufgenommen ist; und
Reflektieren von Atomen, die von der Verdampfungsquelle (8) stammen, durch das Reflektorelement (18; 18'), wobei Atome (9), die durch das Reflektorelement (18; 18') reflektiert werden, auf dem Bereich (17; 17') des Substrats (1) abgeschieden werden.

2. Verfahren nach Anspruch 1,
bei dem das Gas zu dem Bereich (17; 17') von einer, bezogen auf den Bereich (17; 17'), stromabwärts liegenden Seite aus zugeführt wird.

3. Verfahren nach Anspruch 2,
bei dem das Gas neben Sauerstoff zumindest Stickstoff oder eines der inerten Gase enthält.

4. Verfahren nach Anspruch 1,
weiterhin enthaltend den Schritt des Zuführens von beschleunigten Elektronen in der Nähe einer Startposition des Bereiches (17; 17'), an der die Atome (9) beginnen, sich entlang der Laufrichtung des Substrates (1) abzuscheiden.

5. Verfahren nach Anspruch 1,
weiterhin enthaltend den Schritt des Bereitstellens eines Trennelementes (20), welches verdampfte Atome (9) daran hindert, sich in Richtung einer Grenze (11) des Bereiches (17') zu bewegen, wobei die Grenze (11) auf einer, bezogen auf die Laufrichtung (6) des Substrates (1) stromabwärts liegenden Seite des Bereiches (17') vorhanden ist.

6. Verfahren nach Anspruch 5,
bei dem das Gas dem Bereich (17') zugeführt wird.

7. Verfahren nach Anspruch 6,
bei dem das Sauerstoffgas neben Sauerstoff zumindest Stickstoff oder eines der inerten Gase enthält.

8. Verfahren nach Anspruch 5,
weiterhin enthaltend den Schritt des Zuführens beschleunigter Elektronen in der Nähe einer Startposition des Bereiches (17'), an der die Atome beginnen, sich entlang einer Laufrichtung (6) des Substrates (1) abzuscheiden.

9. Vorrichtung zum Erzeugen eines magnetischen Dünnschicht-Aufzeichnungsmediums, enthaltend:
ein Substrat (1),
eine Materialquelle (8), in der ein auf einen Bereich (17; 17') des Substrates (1) abzuscheidendes Material aufgenommen ist,
ein Substratzuführsystem (4, 5), welches das Substrat (1) so zuführt, daß es zu einer gegenüberliegend zu der Materialquelle (8) liegenden Stelle läuft,
zumindest eine Abschirmplatte (3), die zwischen dem Substrat (1) und der Materialquelle (8) vorgesehen ist,
eine Gaszuführleitung (19; 19') zum Zuführen von Sauerstoff enthaltendem Gas zu dem Bereich (17; 17'), und
eine Vakuumkammer (30), welche das Substrat (1), die Materialquelle (8), die Abschirmplatte (3) und die Gaszuführleitung (19; 19') aufnimmt,
weiterhin gekennzeichnet durch ein Reflektorelement (18; 18'), welches in der Vakuumkammer (30) in einer Position angeordnet ist, in der verdampfte Atome (9), die von der Materialquelle stammen, durch das Reflektorelement (18; 18') in Richtung des Bereiches (17; 17') auf dem Substrat (1) reflektiert werden, wobei verdampfte Atome (9), die von der Materialquelle (8) stammen, nicht abgeschieden werden würden, wenn das Reflektorelement (18; 18') nicht vorgesehen wäre, wobei das Reflektorelement (18; 18') erhitzt wird, um eine Temperatur oberhalb des Schmelzpunktes des in der Materialquelle (8) aufgenommenen Materials (7) aufzuweisen.

10. Vorrichtung nach Anspruch 9,
bei der das Reflektorelement (18; 18') Kohlenstoff enthält.

11. Vorrichtung nach Anspruch 9,
bei der die Gaszuführleitung (19; 19') in einer Position in der Nähe des Substrats (1) in einer, bezogen auf den Bereich (17; 17'), stromabwärts liegenden Seite angeordnet ist.

12. Vorrichtung nach Anspruch 11,
bei der die Gaszuführleitung (19; 19') Gas zuführt, welches neben Sauerstoff zumindest Stickstoff oder eines der inerten Gase enthält.

13. Vorrichtung nach Anspruch 9,
weiterhin enthaltend ein Trennelement (20), welches in einer Position angeordnet ist, um verdampfte Atome (9) daran zu hindern, sich in Richtung einer Grenze (11) des Bereiches (17; 17') zu bewegen, wobei die Grenze (11) auf einer, bezogen auf die Laufrichtung (6) des Substrates (1), stromabwärts liegenden Seite des Bereiches (17; 17') vorhanden ist.

14. Vorrichtung nach Anspruch 9,
weiterhin enthaltend eine Elektronenkanone (24), die in einer Position angeordnet ist, um beschleunigte Elektronen in der Nähe einer Startposition des Bereiches (17') zuzuführen, in der Atome (9) beginnen, sich entlang der Laufrichtung (6) des Substrates (1) abzuscheiden.

## Revendications

1. Procédé de fabrication d'un moyen d'enregistrement magnétique à film mince dans un dispositif de dépôt de film mince comprenant les étapes :
de réalisation d'un substrat en mouvement (1);
de réalisation d'une source de matière (8)dans laquelle une matière (7) devant être déposée sur une région (17;17') qui se trouve sur ledit substrat (1) est mise en place en face dudit substrat (1) dans une chambre à vide (30);
de réalisation d'au moins une tôle de protection (3) entre ledit substrat (1) et ladite source de matière (8); de fourniture l'oxygène à ladite région (17;17') d'un gaz comprenant de; et
d'évaporation de la matière (7) mise en place dans ladite source de matière (8) pour déposer des atomes (9) évaporés depuis la source de matière (8) sur ladite région (17;17') qui se trouve sur ledit substrat (1);
caractérisé par les étapes supplémentaires de
réalisation d'un élément réflecteur (18;18') installé à une position dans laquelle les atomes évaporés (9) venant de ladite source de matière (8) sont renvoyés par ledit élément réflecteur (18; 18') vers ladite région (17; 17') qui se trouve sur ledit substrat (1) où les atomes évaporés (9) venant de ladite source de matière (8) ne se déposeraient pas si ledit élément réflecteur (18; 18') n'était pas prévu, et d'augmentation d'une température dudit élément réflecteur (18; 18') au-dessus d'un point de fusion de la matière (7) mis en place dans ladite source de matière (8); et
renvoi des atomes arrivant de ladite source d'évaporation (8) au moyen dudit élément réflecteur (18; 18'), où les atomes (9) renvoyés par ledit élément réflecteur (18; 18') se déposent sur ladite région (17; 17') qui se trouve sur ledit substrat (1).

2. Procédé selon la revendication 1, dans lequel le gaz est fourni à ladite région (17; 17') depuis un côté aval par rapport à ladite région (17; 17').

3. Procédé selon la revendication 2, dans lequel le gaz comprend au moins de l'azote ou l'un des gaz inertes en plus d'oxygène.

4. Procédé selon la revendication 1, comprenant en outre l'étape de fourniture d'électrons accélérés à proximité d'une position de démarrage de ladite région (17; 17') à laquelle les atomes (9) commencent à être déposés le long de la direction du mouvement dudit substrat (1).

5. Procédé selon la revendication 1, comprenant en outre l'étape de réalisation d'un élément de séparation (20) qui empêche les atomes évaporés (9) de circuler vers une limite (11) de ladite région (17'), la limite (11) étant au niveau d'un côté aval de ladite région (17') par rapport à une direction du mouvement dudit substrat (1).

6. Procédé selon la revendication 5, dans lequel le gaz est fourni à ladite région (17').

7. Procédé selon la revendication 6, dans lequel le gaz d'oxygène comprend au moins de l'azote ou l'un des gaz inertes en plus de l'oxygène.

8. Procédé selon la revendication 5, comprenant en outre l'étape de fourniture d'électrons accélérés à proximité d'une position de démarrage de ladite région (17') à laquelle les atomes (9) commencent à être déposés le long d'une direction du mouvement (6) dudit substrat (1).

9. Dispositif de fabrication d'un moyen d'enregistrement magnétique à film mince comprenant :
un substrat (1);
une source de matière (8) dans laquelle une matière (7) devant être déposée sur une région (17; 17') dudit substrat (1) est mise en place;
un système de fourniture de substrat (4,5) qui fournit ledit substrat (1) de manière à ce qu'il circule en face de ladite source de matière (8);
au moins une tôle de protection (3) prévue entre ledit substrat (1) et ladite source de matière (8);
un tuyau de fourniture de gaz (19; 19') destiné à fournir du gaz comprenant de l'oxygène à la région (17; 17'); et
une chambre à vide (30) contenant ledit substrat (1), ladite source de matière (8), ladite tôle de protection (3) et ledit tuyau de fourniture de gaz (19;19');
caractérisé en outre par
un élément réflecteur (18; 18') qui est installé dans ladite chambre à vide (30) à une position dans laquelle les atomes évaporés (9) venant de ladite source de matière (8) sont renvoyés par ledit élément réflecteur (18; 18') vers ladite région (17; 17') qui se trouve sur ledit substrat (1), où les atomes évaporés (9) venant de ladite source de matière (8) ne se déposeraient pas si ledit élément réflecteur (18; 18') n'était pas présent, ledit élément réflecteur (18; 18') étant chauffé pour obtenir une température supérieure à un point de fusion de la matière (7) mise en place dans ladite source de matière (8).

10. Dispositif selon la revendication 9, dans lequel ledit élément réflecteur (18; 18') comprend du carbone.

11. Dispositif selon la revendication 9, dans lequel ledit tuyau de fourniture de gaz (19; 19') est installé à une position à proximité dudit substrat (1) sur un côté en aval par rapport à la région (17; 17');

12. Dispositif selon la revendication 11, dans lequel le tuyau de fourniture de gaz (19 ; 19') fournit du gaz comprenant au moins de l'azote ou l'un des gaz inertes en plus de l'oxygène.

13. Dispositif selon la revendication 9, comprenant en outre un élément de séparation (20) qui est installé à une certaine position pour empêcher les atomes évaporés (9) de circuler vers une limite (11) de la région (17; 17'), la limite (11) étant à un côté aval de la région (17; 17') par rapport à une direction de circulation (6) dudit substrat (1).

14. Dispositif selon la revendication 9, comprenant en outre un canon à électrons (24) installé à une certaine position pour fournir des électrons accélérés à proximité d'une position de démarrage de la région (17') à laquelle les atomes (9) commencent à être déposés le long d'une direction de circulation (6) dudit substrat (1).
